(19) Europäisches Patentamt
European Patent Office
Office européen des brevets

(11) Publication number: 0 005 697 A1

(12) # EUROPEAN PATENT APPLICATION

(21) Application number: 78100060.9

(22) Date of filing: 01.06.78

(51) Int. Cl.²: C 09 D 3/78
C 08 L 27/18, C 03 C 25/02
C 04 B 35/22

(43) Date of publication of application:
12.12.79 Bulletin 79/25

(84) Designated Contracting States:
DE FR GB

(71) Applicant: E.I. du Pont de Nemours and Company
1007 Market Street
Wilmington, Del. 19898 (US)

(72) Inventor: Richter, Robert Freeland
539 Lakewood Circle
Washington, West Virginia 26181 (US)

(74) Representative: Abitz, Walter, Dr.-Ing. et al,
Abitz, Morf, Gritschneder P.O.Box 860109
D-8000 München 86 (DE)

(54) **Aqueous polytetrafluorethylene dispersions, their use for coating glass fabrics, and the coated products.**

(57) Aqueous dispersions containing a tetrafluoroethylene polymer and fibrous calcium metasilicate filler are provided which exhibit improved crack resistance when coated on fabric such as glass fabric.

EP 0 005 697 A1

TITLE MODIFIED
see front page



AD-4911

TITLE

TETRAFLUOROETHYLENE DISPERSIONS

FIELD OF THE INVENTION

This invention relates to filler-containing tetrafluoroethylene polymer dispersions and to glass fabric coated with such dispersions.

BACKGROUND

Glass fabric is usually coated with a polymeric material such as polytetrafluoroethylene to increase its strength and to protect glass fibers in the fabric. A problem with many glass fabrics coated with polytetrafluoroethylene is a tendency for the coating to crack. The cracks expose the glass fibers to the atmosphere which adversely affects the properties of the fabric.

Many attempts have been made to prepare tetrafluoroethylene polymer dispersions that are useful in coating glass fabric. For example, Hochberg, U.S. Patent 2,710,266, employs non-fibrous alkali metal silicate fillers in polytetrafluoroethylene dispersions which are used to coat woven fabrics, while Cook, U.S. 3,928,703 employs spherical beads as the filler. Cook teaches that the major portion of the beads should preferably have a diameter less than 10 microns. However, when these small spherical beads are coated on glass

fabric, the resulting article exhibits a tendency to develop cracks.

In addition, King, U.S. 3,709,721 and Fay, U.S. 2,843,502 employ fillers in polytetrafluoroethylene dispersions which are coated on textile fabric substrates. The fillers of King can range from 1 to 75 microns in diameter and are employed to provide abrasion resistance. Neither patent addresses the problem of crack resistance.

It is desirable to obtain a fabric coated with a filled tetrafluoroethylene polymer dispersion which exhibits resistance to cracking superior to that of fabrics disclosed in patents recited above.

SUMMARY OF THE INVENTION

In this invention a crack-resistant coated glass fabric is obtained by coating the fabric with an aqueous dispersion of a tetrafluoroethylene polymer and a filler which is a fibrous calcium metasilicate in which no more than about 25% by weight of the fibrous filler particles have a length less than 10 microns.

DESCRIPTION OF THE INVENTION

Fibrous calcium metasilicate filler has the formula $CaSiO_3$. By "fibrous" is meant that the average aspect ratio is 4:1 or more. Preferably it is between 4:1 and 100:1 (and most preferably between 5:1 and 25:1). A commonly available form of calcium metasilicate is called Wollastonite. To be useful in this invention the calcium metasilicate fibers must be of a size such that no more than about 25% by weight of the fibers have a length less than 10 microns. In other words, about 75% by weight of the particles must be longer than 10 microns. In addition, preferably no more than about 1% will be longer than 100 microns. Preferably, the average fiber length will be between

about 20 microns and about 80 microns and most preferably between about 35 microns and about 45 microns. The filler generally comprises 10-30% by weight of the dispersion.

The tetrafluoroethylene polymer employed herein is the non-melt fabricable class of tetrafluoroethylene polymer, as opposed to the lower melting, melt-fabricable class of tetrafluoroethylene polymer. The difference between these classes of tetrafluoroethylene polymers can be determined by melt viscosity. Non-melt fabricable polymers have high-melt viscosities, e.g., $1 \times 10^9$ poise or more at 380°C; while melt-fabricable polymers have much lower melt viscosities, e.g., on the order of $1 \times 10^4$ to $1 \times 10^6$. Melt viscosity of the polymer depends in large part upon the amount, if any, of comonomer present. Generally, the more comonomer present, the lower the melt viscosity. Melt viscosity also depends on the molecular weight of the comonomer. Thus, non-melt fabricable tetrafluoroethylene polymers employed herein include polytetrafluoroethylene and copolymers of tetrafluoroethylene and a different perfluorinated ethylenically unsaturated monomer present in an amount which does not cause the melt viscosity of the resultant copolymer to be below $1 \times 10^9$ poise at 380°C. One preferred class of ethylenically unsaturated monomers is perfluoro(alkyl vinyl ethers) of 3-7 carbon atoms. Generally, the polymer can contain between about 0.1-0.5% by weight of those comonomers before the melt viscosity falls below $1 \times 10^9$ poise. The maximum amount depends on the molecular weight of the comonomer. For perfluoro(propyl vinyl ether) the upper limit will be about 0.5%. This limit will be lower as the molecular weight of the ether increases. Another preferred class is perfluoro(terminally

unsaturated olefins of 3-7 carbon atoms. Generally, the copolymer can contain up to between about 0.5-2.5% by weight of these comonomers before the melt viscosity falls below 1 x $10^9$ poise. The maximum amount depends on the molecular weight of the comonomer. For hexafluoropropylene, the upper limit will be about 2.5%. This limit will be lower as the molecular weight of the olefin increases.

The tetrafluoroethylene polymers employed herein are prepared by the aqueous dispersion preparative method, rather than by the suspension polymerization method. In the aqueous dispersion method, a dispersion of the polymer is obtained by polymerization in an aqueous medium containing dispersing agent, such as from 0.2 to 0.8% by weight (based on weight of water) ammonium polyfluorocarboxylate containing from 7-10 carbon atoms, to form an emulsion of tetrafluoroethylene polymer particles in water. These particles are substantially round and have an average diameter generally within the range of 0.1 to 0.5 micron. Polymer concentration is not critical, but generally ranges between about 35-70% by weight based on weight of dispersion (tetrafluoroethylene plus water plus non-ionic surfactant). Preferred tetrafluoroethylene polymer concentration in the dispersion is 55 to 65%. The pH of the dispersion may be adjusted, if desired, to at least 7 by the addition of a basic compound in order to minimize corrosive attack on metal surfaces. On coagulation, the resulting powder obtained is usually referred to in the art as "find powder". (On the other hand, the powder obtained from suspension polymerization is usually referred to as "granular" resin.)

The nonionic surfactant component in the dispersion is present in an amount of at least 3% by

weight of the polymer. The surfactnat aids in maintaining the polymer particles suspended in the dispersion. If the nonionic surfactant content is increased to about 11% or more, the sintered or fused product obtained from the dispersion will have a distinct brownish color. If it is desired to minimize discoloration, a concentration of surfactant as close to 5% by weight as possible may be used. As polymer solids concentration in the dispersion to be thickened is decreased from 60% by weight, greater amounts of the nonionic surfactant are required to assist in thickening without coagulation of polymer. Generally from 5 to 8% by weight of the surfactant will prevent coagulation when an electrolyte thickening agent is added as described below.

The nonionic surfactant is any nonionic surfactant which is soluble in water at room temperature (20-25°C) at the concentration desired and can be composed of a single nonionic surfactant or a mixture of nonionic surfactants. Typically, the nonionic surfactants are reaction products of ethylene oxide, which imparts a hydrophilic moiety to the surfactant, with other compounds which impart hydrophobic moieties to the surfactant, such as propylene oxide, amines saturated and unsaturated aliphatic alcohols and aliphatic acids, and alkyl phenols. For purposes of illustration, some of the foregoing mentioned nonionic surfactants are further illustrated hereinafter by the formulae:

$$R'[O(A)_nH]_x$$

wherein $(A)_n$ is the group $-(C_2H_4O)-_n$ or a mixture of the groups $-(C_2H_4O)-_a$ and $-(C_3H_6O)-_b$, wherein n in each instance is an integer of from 2 to 50 and preferably 2 to 18, b is an integer of 0 to 30, and a is an integer of at least 2, a+B being equal to n; x is an

integer of 1, 2, or 3; and R' is an aliphatic hydrocarbon group which can be saturated or unsaturated, straight-chain, branched, or cyclic, and will generally contain from 8 to 24 carbon atoms, preferably from 8 to 18 carbon atoms; examples of R groups include oleyl, stearyl, tridecyl, lauryl, decyl and the groups derived from aliphatic glycols and triols; $R^2-C_6H_4O(B)_mH$, wherein B is the group $-(C_2H_4O)-_c$ or a mixture of the group $-(C_2H_4O)-_c$ and $-(C_3H_6O)-_d$, wherein m in each instance is an integer of from 2 to 50 and preferably 8 to 20, d is an integer of 0 to 30, c is an integer of at least 2, c+d being equal to m; $R^2$ is a monovalent aliphatic and usually saturated hydrocarbon group containing 4 to 20 carbon atoms and preferably 8 to 12 carbon atoms;

$$R^4-\overset{R^3}{\overset{|}{N}}[(CH_3CH_2O)_pH]_z$$

and

$$R^4-CO\overset{R_3}{\overset{|}{N}}[(CH_2CH_2O)_2H]$$

wherein p is an integer of 2 to 50; z is an integer of 1 or 2; $R^4$ is an alkyl group containing 1 to 8 carbon atoms; $R^3$ is $(CH_2CH_2O)_pH$, when z is 2 and an alkyl group of 1 to 8 carbon atoms when z is 1; with the proviso that at least 5 carbon atoms are provided by $R^3 + R^4$; the polyalkylene oxide block copolymers of the formula

$$HO(C_2H_4O)_e(C_3H_6O)_f(C_2H_4O)_gH,$$

wherein f is an integer of from 15 to 65 and e and f are integers sufficiently large that e+g total 20 to 90 percent of the total weight of the polymer. For each of the surfactants of the foregoing described formulae, the hydrophobic and hydrophilic moieties are proportioned such and the total molecular weight is such that the surfactant is water soluble. Specific surfactants within these formulae include:

$CH_3(CH_2)_4CH_2(OCH_2CH_2)_3OH$; $CH_3(CH_2)_6CH_2(OCH_2CH_2)_3OH$; $CH_3(CH_2)_{10}CH_2(OCH_2CH_2)_{12}(OCH(CH_3)CH_2)_3OH$; $CH_3(CH_2)_8$-$CH_2(OCH_2CH_2)_{10}OH$; $CH_3(CH_2)_8CH_2(OCH_2CH_2)_3OH$; and $CH_3C(CH_3)_2CH_2C(CH_3)_2$- -$(OCH_2CH_2)_{10}OH$ (Triton X-100).

Usually the tetrafluoroethylene dispersion also contains a thickening agent to aid in preventing the dispersion ingredients, and in particular the filler, from settling out of the dispersion. Any known thickening agent can be employed, but ordinarily an ionic salt which imparts an ionic strength of at least 0.01 mols per liter to the dispersion is employed. Many such ionic salts are described in Ribbans U.S. 3,830,770. Preferred ionic salts useful in the practice of this invention include barium nitrate, ammonium nitrate, sodium carbonate, and sodium phosphates having an $Na_2O:P_2O_5$ ratio of between 1:1 and 3:1, inclusive. The thickening agent is usually used in an amount sufficient to resulent in a dispersion viscosity of about 50 centipoise or more, as determined in Brookfield Viscometer Model LVT operating at 60 rpm at 25°C using a #2 spindle.

The dispersions of the present invention are useful for coating various articles, such as woven glass fabric. Coatings octained using the dispersion of this invention are not as susceptible to cracking as are coatings prepared from dispersions in which the particle size of the filler material is not controlled as described herein and which contain over 25% by weight particles under 10 microns. The dispersion is applied to the fabric by spraying, dipping, or brushing, and coated fabric is dried by conventional means.

Although not essential, one or more coats of polytetrafluoroethylene can be applied to the glass fabric to increase tear strength before the fibrous

calcium metasilicate filler-containing coat is applied. Aids to increasing tear strength can be present in the dispersion used to apply these coats and one such common class of aids is silicones. Similarly, one or more coats of polytetrafluoroethylene containing a sealing aid, such as a melt-fabricable copolymer of tetrafluoroethylene and hexafluoropropylene, can be applied prior to applying the calcium metasilicate filler containing coat.

Melt viscosities of the tetrafluoroethylene polymers are calculated by measuring the tensile creep of a sintered piece held at 380°C. Specifically, 12 g of molding powder is placed in a 7.6 cm diameter mold between 0.152 cm rubber cauls and paper spacers. The mold is then heated at 100°C for 1 hour. Pressure is then slowly applied on the mold until a value of 140.6 $kg/cm^2$ is obtained. This pressure is held for 5 minutes and then released slowly. After the sample disc is removed from the mold and separated from the cauls and paper spacers, it is sintered at 380°C for 30 minutes. The oven is then cooled to 290°C at a rate of about 1°C a minute and the sample is removed. A crack-free rectangular sliver with the following dimensions is cut: 0.152 to 0.165 cm wide, 0.152 to 0.165 cm thick, and at least 6 cm long. The dimensions are measured accurately and the cross-sectional area is calculated. The sample sliver is attached at each end to quartz rods by wrapping with silver-coated copper wire. The distance between wrappings is 4.0 cm. This quartz rod-sample assembly is placed in a columnar oven where the 4 cm test length is brought to a temperature of 380°$\pm$2°C. A weight is then attached to the bottom quartz rod to give a total weight suspended from the sample sliver of about 4 g. The elongation measurements vs. time are obtained, and the best

average value for the creep rate in the interval between 30 and 60 minutes is measured. The specific melt viscosity, which may be better called apparent melt viscosity, is then calculated from the relationship.

$$\eta app = (WL_t g)/3(dL_t/dt)A_t$$

where

$\eta app$ = (apparent) melt viscosity in shear, poises
W = tensile load on sample, g
$L_t$ = length of sample (at 380°C) cms (4.32) cm
g = gravitational constant, 980 cm/sec$^2$
$(dL_t/dt)$ = rate of elongation of sample under load = slope of elongation vs. time plot, cm/sec
$A_t$ = cross-sectional area of sample (at 380°C0, cm$^2$
(area increases 37% at 380°C over that at room temperature).

Viscosities of aqueous dispersions described herein are measured using a Brookfield viscometer (model LVT) operating at 60 rpm at 25°C using a #2 spindle. The spindle is lowered into the dispersion and the viscometer is turned on and allowed to equilibrate for one minute before a reading is taken. Readings were taken in triplicate and averaged. The averaged value was multiplied by 5 to obtain the viscosity in centipoise (cps).

The following Examples illustrate the invention:

EXAMPLE 1

A plain weave glass fabric with a warp yarn of ECB 150 4/2 and a fill yarn of ECB 150 4/2, woven to a warp and fill count of 24 x 19 was heat treated to remove most of the starch sizing by passing the fabric through a 360°C 4-ft oven at 3 ft/min. The glass fabric was then dip coated to obtain a coat of polytetrafluoroethylene (PTFE) dispersion containing

50% solids (6% of which is Triton X-100 nonionic surfactant) and containing 4% (by weight) of ET-4327 Dow Corning silicone emulsion (to increase tear strength). The coated fabric was dried and sintered by passing the fabric through a 150°C 7-ft oven and then through a 360°C 4-ft oven at 3 ft/min. The coated fabric was then coated in the same manner with a 50 wt. % PTFE dispersion containing 4% (based on weight of PTFE) of a 84 wt. % tetrafluoroethylene/16 wt. % hexafluoropropylene (HFP) copolymer dispersion (55 wt. % solids) as a sealant along with 0.5% of a wetting agent.

After the above coatings were applied, five coats of a mixture composed of PTFE dispersion containing 65% solids (by weight) of which 22% is calcium metasilicate acicular filler (wollastonite) having an average aspect ratio greater than 4:1, 6% nonionic surfactant (Triton X-100) based on polymer, and sufficient thickening agent (1.15 $Na_2O:P_2O_5$ and buffers, added in the form of "Calgon") to obtain a viscosity of about 200 cps, were coated onto the fabric by dip coating. The calcium metasilicate filler had an average particle size of 38 microns with 5% of the particles being less than 10 microns and 0% above 100 microns. The speed of the fabric through the mixture was 3 ft/min and wiper bars were used on each side of the fabric. The fabric was passed through a 7-ft drying oven at 150°C and then passed through a 4-ft sintering oven at 360°C to sinter the coating. No cracks were observed by microscopic examination at 56X.

EXAMPLE 2

A plain weave glass fabric described as in Example 1 was coated with 2 coats of PTFE as described in Example 1.

After the two PTFE coatings were applied, four coats of a mixture composed of a PTFE dispersion

containing 65% solids (by weight) of which 22% is calcium metasilicate acicular filler (wollastonite) having an average aspect ratio greater than 4:1, 6% nonionic surfactant (Triton X-100) based polymer, and sufficient thickening agent (1.15 $Na_2O:P_2O_5$ and buffers, added in the form of "Calgon") to obtain a viscosity of about 200 cps, were coated onto the fabric by dip coating. The calcium metasilicate filler had an average particle size of 43 microns with 12% of the particles being less than 10 microns and 5% above 100 microns. The speed of the fabric through the mixture was 3 ft/min and wiper bars were used on both sides of the fabric. The fabric was passed through a 7-ft drying oven at 150°C and then passed through a 4-ft sintering oven at 360°C to sinter the coating. No cracks were observed by microscopic examination at 56X. The fabric was rough to the touch.

COMPARATIVE EXAMPLE

A plain weave glass fabric with a warp yarn of ECB 150 4/2 and a fill yarn of ECB 150 4/2, woven to a warp and fill count of 24 x 19, was heat treated to remove most of the starch sizing by passing the fabric through a 360°C 4-ft oven at 3 ft/min. The glass fabric was then dip coated to obtain a coat of polytetrafluoroethylene (PTFE) dispersion containing 50% solids (6% of which is Triton X-100 nonionic surfactant and containing 4% by weight of ET-4327 Dow Corning silicone emulsion to increase tear strength). The coated fabric was dried and sintered by passing the fabric through a 150°C 7-ft oven and then through a 360°C 4-ft oven at 3 ft/min. The coated fabric was then coated in similar manner with a 50 wt. % PTFE dispersion containing 4% (based on weight of PTFE) of a 84 wt. % tetrafluoroethylene/16 wt. % hexafluoropropylene (HFP) copolymer dispersion (55 wt. % solids) as sealant along with 0.5% of a wetting agent.

After the above coatings were applied, five coats of a mixture composed of a PTFE dispersion containing 65% solids (by weight) of which 22% is calcium metasilicate acicular filler (wollastonite) having an average aspect ratio greater than 4:1, 6% nonionic surfactant (Triton X-100) based on polymer, and sufficient thickening agent (1.15 $Na_2O:P_2O_5$ and buffers added in the form of "Calgon") to obtain a viscosity of about 200 cps were coated onto the fabric by dip coating. The calcium metasilicate filler had an average particle size of 25 microns with 28% of the particles less than 10 microns and 8% above 100 microns. The speed of the fabric through the mixture was 3 ft/min and wiper bars were used on both sides of the fabric. The fabric was passed through a 7-ft drying oven at 150°C and then through a 4-ft sintering oven at 360°C to sinter the coating. Cracks were observed by microscopic examination at 56X.

CLAIMS

1. An aqueous dispersion of a tetrafluoroethylene polymer having a melt viscosity of at least 1 x $10^9$ poises at 380°C, which dispersion contains fibrous calcium metasilicate particles in which no more than about 25% by weight of the particles have a length less than 10 microns.

2. The aqueous dispersion of Claim 1 in which the fibrous calcium metasilicate particles have an average aspect ratio of between about 4:1 and 100:1 and an average length of between about 20 and 80 microns.

3. The aqueous dispersion of Claim 2 in which the polymer is present in an amount of between about 35-45% based on weight of water and polymer, and the fibrous particles are present in an amount of between about 10-30% by weight based on weight of water, polymer and fibrous particles.

4. The aqueous dispersion of Claim 3 wherein not more than about 1% by weight of the fibrous particles have a length greater than 100 microns.

5. The aqueous dispersion of Claim 4 wherein the dispersion additionally contains a thickening agent consisting essentially of an ionic salt.

6. The aqueous dispersion of Claim 3 wherein the tetrafluoroethylene polymer is polytetrafluoroethylene.

7. Process for preparing a coated glass fabric which comprises coating at least one side of a glass fabric with an aqueous dispersion which contains a tetrafluoroethylene polymer having a melt viscosity of at least $1 \times 10^9$ poises at 380°C and fibrous calcium metasilicate particles in which no more than 25% by weight of the particles have a length less than 10 microns, and drying and sintering the coated fabric.

8. Process of Claim 7 which comprises coating the glass fabric with one or more coats of a polytetrafluoroethylene aqueous dispersion prior to coating it with the dispersion described in Claim 7.

9. Process of Claim 7 in which the aqueous dispersion contains a thickening agent.

10. A coated glass fabric consisting essentially of a glass fabric substrate having a coating on at least one side thereof which consists essentially of a tetrafluoroethylene polymer having a melt viscosity of at least $1 \times 10^9$ poises at 380°C and fibrous calcium metasilicate particles in which no more than 25% by weight of the particles have a length less than 10 microns.

11. A coated glass fabric of Claim 10 wherein the glass fabric contains one or more coats of polytetrafluoroethylene interposed between the substrate and the coating described in Claim 10.

0005697

European Patent Office

# EUROPEAN SEARCH REPORT

Application number
EP 78 10 0060

## DOCUMENTS CONSIDERED TO BE RELEVANT

| Category | Citation of document with indication, where appropriate, of relevant passages | Relevant to claim |
|---|---|---|
| X | US - A - 3 879 302 (F.G. REICK)<br>* Claims; column 4, lines 11-18, 41-56 *<br>-- | 1,6 |
| X | US - A - 3 653 949 (J.J. DILLON)<br>* Claims *<br>-- | 7,10 |
| X | US - A - 3 617 004 (J.W. HYLAND et al.)<br>* Claims *<br>-- | 1 |
| X | US - A - 3 804 701 (J.A.BOGNAR)<br>* Claims *<br>-- | 1 |
| X | US - A - 3 896 071 (R.V. POIRIER)<br>* Claims; column 4, line 11 to column 5, line 28 *<br>---- | 1,6,7,10 |

CLASSIFICATION OF THE APPLICATION (Int. Cl.²)

C 09 D 3/78
C 08 L 27/18
C 03 C 25/02
C 04 B 35/22

TECHNICAL FIELDS SEARCHED (Int.Cl.²)

C 09 D 3/78
C 08 L 27/18
C 03 C 25/02
C 04 B 35/22

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| The Hague | 12-01-1979 | FOUQUIER |